# EUROPEAN PATENT APPLICATION

(11) **EP 0 933 336 A1**
(43) Date of publication of application: **04.08.1999**
(21) Application number: 98101620.7
(22) Date of filing: 02.02.1998
(51) Int. Cl.: C02F 9/00, C02F 1/78, C02F 3/12, C02F 3/10, C02F 3/34

(54) **Waste pre-treatment and modular process comprising said pre-treatment**

(71) Applicant: Horeak AG, 4133 Pratteln (CH)
(72) Inventor: Kühne, Anton, CH-8049 Zürich (CH); Leist, Christian, CH-5264 Gipf-Oberfrick (CH)
(74) Representative: Monsch, René

(57) **Abstract**

A process for waste treatment comprising an oxidation step, particularly with ozone as oxidant, and at least one biological step, preferably one involving modified micro-organisms, as well as a modular waste-treatment plant for performing such waste treatment are described.

Due to its efficiency, the process allows much smaller plants which is very desirable for e.g. waste water treatment, and by the modular construction of the plants, e.g. a series of bioreactors, varying compositions can readily be treated.

## Description

### TECHNICAL FIELD

The present invention concerns a waste pre-treatment step enhancing the effectiveness of usual waste treatment operations as well as a multi-step process and a multi-modular waste treatment plant for performing said process.

### BACKGROUND ART

The permanent increasing of environmental pollution with biological and chemical substances demands for constant purification improvements. National and international restrictions concerning environment and industry are rising up, necessitating suitable means to enable the addressees of such restrictions to meet such requirements.

Today used waste treatment plants, such as waste water treatment plants, as they are common for example in Europe and the United States of America, are composed of several treatment steps, carried out in large basins. Said state of the art plants have the disadvantage that they are land-consuming, that they are not suitable for a fast treatment and that they do not allow a fast adaptation to changes in the composition of the waste. Such state of the art plants generally are composed of a step, separating large solids, followed by a sieving step, separating smaller solids. The remaining suspension then is biologically treated with micro-organisms digesting usual organic waste. Optionally, said biological treatment is followed by a chemical treatment, e.g. a phosphate precipitation.

If the waste composition changes markedly and/or if toxic substances occur therein, the micro-organisms used may be unable to suitably digest said waste, or they may even be killed by such toxic substances whereby the respective biological step becomes inapplicable for days.

Therefore, there is still a need for small waste treatment plants which are less sensitive to changes in the waste composition and to toxic substances. The goal of the present invention thus was to provide such a plant.

### DISCLOSURE OF INVENTION

It is not possible to reduce the size of a waste treatment plant of the state of the art without an undue loss of effectiveness. Thus, one subject of the present invention is to provide a pre-treatment reaction enhancing the effectiveness of the following biological steps. Another subject of the present invention is to provide a first biological step, improving the average lifetime of usual micro-organisms.

Just another subject is to provide a multi-step process for waste treatment.

Still another subject is to provide a modular waste treatment plant.

The pre-treatment step of the present invention is an oxidation step performed prior to the first biological step. During said oxidation step, large organic molecules such as oils are reduced to an easily digestible size. Oxidants that are stronger than oxygen are suitable to reduce organic molecules. Such oxidants are for example Cl₂, H₂O₂ and O₃. All of the above mentioned oxidants are suitable, however, oxidants convertible to oxygen, that is H₂O₂ and particularly O₃, are preferred. By using oxidants that are converted to oxygen, not only a reduction in the size of organic molecules is achieved, but additionally the oxygen content of the waste is enhanced and thus the digestion by aerobic micro-organisms is improved.

If non-aerobic micro-organisms are used in the first biological step, a different oxidant may of course be more suitable.

If for a digestion by aerobic micro-organisms a high oxygen content generated by the oxidation step is requested, said oxidation step is advantageously performed directly prior to the first biological step, i.e. after possible previous steps as they are known from the state of the art.

Although the ozone treated waste besides of oxygen may also still comprise ozone, said ozone has been found to be not detrimental to the whole of the micro-organisms of the first biological step if sufficient digestible waste is present to ensure sufficient proliferation of the micro-organisms.

Besides the reduction in size of large organic molecules, during the oxidation step also undesired micro-organisms that might possibly be present in the waste are at least partially killed.

Said oxidation step is preferably performed in a reactor providing, besides material supplying and releasing means, at least one efficient mixing device as well as control means.

An efficient mixing is crucial for the rapid achieving of a homogeneous distribution of the oxidant throughout the whole reaction vessel and therewith a minimum residence time. Suitable reactors are all efficient mixers that additionally allow process regulation. A particularly suitable reactor is a bioreactor with mixing devices allowing vigorous mixing. Such bioreactors are preferred since they are particularly designed for process regulation. Such a pre-treatment step of course is suitable in combination with all waste treatment plants.

Any waste treatment can be improved by at least one specific biological step involving modified micro-organisms. Said modified micro-organisms can be chosen according to the actual need. If e.g. oil rich waste has to be treated, and if the oil cannot be sufficiently reduced in size by the oxidation step, usual (normal, non-modified) micro-organisms cannot easily digest said oil remainders. Such waste can previously be subjected to a digestion by modified micro-organisms provided with the ability to digest such oil remains. Modified micro-organisms, able to digest a broad variety of substances that are not digestible by usual micro-organisms, and that neither or only insufficiently are decomposable during an oxidation step, are known or readily obtainable by methods well known to the skilled person, such as selection methods or methods of genetical engineering. Such modified (adapted) micro-organisms can for example also be used to digest quite toxic substances such as dioxin.

By such a biological step, involving adapted micro-organisms, the risk that the "normal" micro-organisms usually used in waste treatment plants are intoxicated, is markedly reduced. Thus, by such a biological step involving adapted micro-organisms, the chance for a continuous waste treatment, due to reduced intoxication of usual micro-organisms, is much enhanced. Also this step is very generally applicable in all waste treatment plants. Additionally, the combination of an oxidation step with such a treatment with modified micro-organisms allows the complete elimination of viral and bacterial contaminations as well as degrading of highly toxic substances, whereby said elimination and degradation are achieved without the need of extensive heating or application of pressure.

Of course, a treatment with modified micro-organisms is not needed for all waste. If the waste for example consists of compostable vegetable kitchen refuse, the presence of toxic substances is unlikely, and therefore a treatment with "normal", that is non-modified, micro-organisms is sufficient.

Thus, a possible method for waste treatment, particularly waste water treatment, according to the present invention comprises at least one oxidation step and at least one biological step. If an oxygen generating oxidant is used, which is preferred, the oxidation step is advantageously performed directly prior to the biological step, to ensure that oxygen generated during the oxidation step is still present in the waste and thus available for the subsequent digestion process performed by aerobic micro-organisms. Even more preferably that method comprises at least two biological steps, whereby the first of them optionally involves modified micro-organisms. If need be, a chemical precipitation step and/or a sterilisation step can be provided. Preferably said precipitation and sterilisation steps are performed after the biological steps. E.g. the precipitation step is advantageously performed after the biological steps in order to avoid digestible waste being covered by reagents used during said step or by products produced during said step or to avoid that such waste possibly is precipitated together with such products produced during said steps.

Since a lot of waste water comprises large solid remains, sieving steps may be included in the process, preferably prior to the oxidation step. Such large remains, retained in sieves, can be diminished in size, diluted and also subjected to the above described waste treatment, either separately or combined with waste suspension as obtained after sieving. A preferred waste treatment process, particularly suitable for waste water treatment comprises an oxidation step, directly followed by at least one biological step involving modified micro-organisms, at least one biological step involving normal (unmodified, natural) micro-organisms and optionally at least one chemical treatment step, e.g. a precipitation and/or a sterilisation step.

If the treatment process is used as composting process, due to the assumably less toxic and more uniform composition of the refuse, not all previously discussed steps are needed. Such a process usually can be limited to an oxidation step followed by at least one biological step involving normal (unmodified) micro-organisms.

If the treatment process is used for waste with varying composition and possibly toxicity, besides the oxidation step, several biological steps including differently or identically modified micro-organisms can be provided, whereby a respective plant can be designed to allow the use of all steps in series, the use of specific steps only or the parallel use of several reactors comprising identical microorganisms. Also with regard to unmodified, "normal" micro-organisms, several reactors can be provided which can be used as described above.

As already mentioned, modified micro-organisms can be bought or obtained by well known selection methods or genetical engineering. Suitable modified micro-organisms such as Pseudomonas oleovorans, E. Coli 3110 with plasmid are e.g. available from respective strain collections such as ATCC, DSM, the "Technische Universität Winterthur" at Winterthur, Switzerland.

For example the above mentioned Pseudomonas oleovorans and E. Coli 3110 with plasmid are suitable for the treatment of oil comprising waste.

Non-modified, "normal" micro-organisms are available from any waste water treatment plant.

The oxidation step, particularly the one with ozone as oxidant, usually is performed in a temperature range of from 0° C to 60° C, preferably in a temperature range of from 0° C to 30° C.

In order to optimise the costs, particularly if the preferred but rather expensive ozone is used, at least part of the non-reacted ozone is recycled into the process after admixture of "fresh" ozone. By this recycling of exhaust gas and admixing of fresh ozone thereto, the ozone and oxygen concentration can be kept below the dangerous limit of at most about 15 % ozone. The ratio of recycled exhaust gas to the exhaust gas let off into the environment can e.g. be guided by keeping the pressure in the reactor constant and by adjusting the ozone concentration.

The exhaust gas let off into the environment is, due to the therein still comprised oxidant and possibly undesired odours, advantageously guided through a catalyst converting e.g. ozone to oxygen. In case of need, unpleasantly smelling substances can be adsorbed by adsorbents well known for this purpose in the state of the art. Alternatively the exhaust gas can be combusted.

Already in the oxidation step, regulation means for the regulation of pH and pO₂ can be provided and may be advantageous. Particularly the regulation of pH may be desirable to ensure that, and on the one hand, oxidation takes place under optimised conditions, on the other hand, by adjusting the pH during the oxidation step, conditions detrimental to the micro-organisms of the following step can be avoided. Furthermore the determination of the total organic compounds has proven to be a simple method to regulate the ozone amount needed. Preferred ranges for said parameters are: pH = 4 - 7; pO₂ > 0 %.

The biological steps are performed in reactors provided with measuring and adjusting means for pH, pO₂ as well as supply means for growth factors needed by the respective micro-organisms, such as proteins, trace elements, etc. A preferred bioreactor for the treatment with micro-organisms is a horizontal-bioreactor as e.g. described in the Swiss patent CH 685 631 to A. Kühne. The pH can be adjusted by a broad variety of acids and bases such as e.g. hydrochloric acid (not suitable for metallic reactors), nitric acid, sulphuric acid, sodium hydroxide etc. Growth factors are preferably added continuously and adapted to the specific micro-organisms.

During the oxidation step and particularly during the biological steps, temperature control is advantageous. Reactors comprising cooling and heating means are readily available, e.g. bioreactors. Additionally, recycling of material from a later to a previous step can be provided. Such recycling is particularly desirable if the amounts of waste supplied to the plant are varying significantly. By recycling part of the material, it can be ensured that the liquid is in constant movement, which is advantageous, at least for the preferred type of continuously working plants. The possibility for recycling is advantageously provided at least between the oxidation step and the first biological step. If recycling between the first biological step and the oxidation step is provided, it is preferred that the micro-organisms are immobilised to ensure that they remain in their reaction vessel to avoid their contact with a high oxidant dose. Preferred parameters for the biological steps are pH = 4 - 7; PO₂ > 0 %; Temp. = 30° C - 70° C.

Said process for waste treatment is suitable for a broad variety of wastes, comprising oxidizable and digestible waste, provided that the waste is or is brought into flowable consistency. The process of course can also be applied for air treatment.

Fields of application of such processes or respective plants, are e.g.

### Environment Engineering

- Purification of biologically and chemically contaminated waste water
- Detoxification of toxic waste

### Chemical/Pharmaceutical Industry

- Decontamination of waste

### Oil Industry

- Detoxification of waste gas and waste water
- Detoxification of oil polluted water
- Soil decontamination

### Hospitals

- Waste water and air treatment

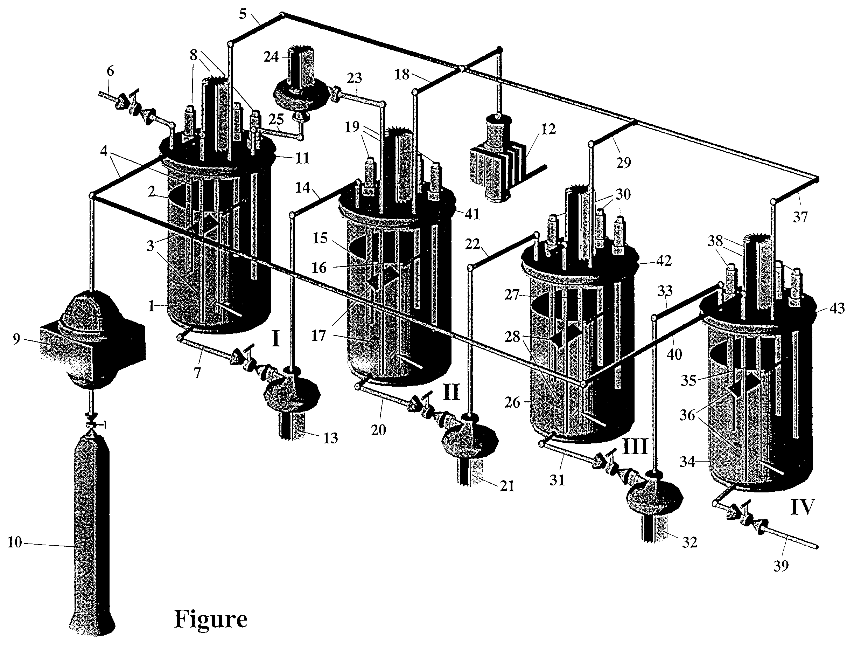

### BRIEF DESCRIPTION OF THE DRAWING

The Figure represents a continuously working waste treatment plant comprising a first reactor designated for performing an oxidation step with ozone as oxidant, a second reactor for a first biological step involving modified micro-organisms, a third reactor for a second biological step involving unmodified micro-organisms and a fourth reactor for a sterilisation step, all reactors working in series.

### MODES FOR CARRYING OUT THE INVENTION

The plant shown in the Figure does only represent the relevant parts of the plant used to perform those steps that distinguish the inventive plant from plants of the state of the art. Thus, means to perform possibly present preliminary steps such as removal of large solids, regulation of the flowability of the waste, basins for intermediate storage of waste, tanks for reagents to supply such as acids, bases, growth factors, etc. are not shown. Such means as well as additional steps, however, are well known to the skilled person.

The first reactor I is designated for performing the oxidation step, here a preferred oxidation with ozone. As said first reactor advantageously a commercially available bioreactor is used, since such a bioreactor is usually equipped with a good stirrer, different sensors, suppliers for reagents and heating/cooling means.

Such a reactor I comprises a reaction vessel 1, provided with a very efficient mixing means 2, 3, here a mechanical stirrer 2, 3 with a vertical rotation axis 2 and perpendicular rotor blades 3. Although the Figure represents reactors with mechanical stirrers 2, 3 with two rotor blades 3, said blades being situated in vertically separated planes, according to the mixing desired, mixers with only one blade or with more blades, either situated in the same or in vertically separated planes can be used as well as other types of stirrers, such as propellers, impellers, nozzles, etc.

Besides of an efficient mixing means, such as a mechanical stirrer 2, 3, the reactor is provided with an oxidant inlet 4, an exhaust gas outlet 5, a waste inlet 6, a waste outlet 7 and several means to measure specific process parameters 8. Such means can be well-known sensors, such as temperature sensors, pH sensors, etc. The oxidant inlet 4 is connected to an oxidant source, here an ozone generator 9 which itself can be connected to an oxygen source 10. The oxidant inlet 4 can provide one single opening for the release of oxidant close to the bottom of the reactor or it can be a tube provided with several holes, said tube being either placed horizontally close to the bottom or vertically, so that fresh oxidant is provided to several places within the waste, thereby facilitating a homogeneous oxidant distribution throughout the waste. The exhaust gas outlet 5 usually is situated in the top plate 11, sealing the reaction vessel 1. The possibly still oxidant, e.g. ozone, comprising exhaust gas is at least in part lead to a cleaning device 12 such as a catalyst, possibly connected with a filter. Part of the oxidant comprising exhaust gas, particularly in the case of ozone, can also be recycled in order to be mixed with fresh oxidant, which is then provided to the reactor (not shown). If temperature control of the oxidation reaction is desired, cooling and heating means can be provided (not shown).

The waste inlet 6 is situated in or close to the top plate 11, the waste outlet 7 is preferably situated in the bottom of the reaction vessel 1 or close to it. By the large spatial separation of waste inlet 6 and waste outlet 7, the longest possible contact time with the oxidant, with a specific throughput given, is ensured.

The waste leaving the oxidation reactor I by connecting tube 7 is forwarded to reactor II trough waste inlet 14, e.g. by a forwarding means such as a pump 13 or by mere gravitation. In reactor II, designated to perform a first biological step with e.g. modified micro-organisms, an oxidant inlet corresponding to 4, can be omitted, but a gas inlet can additionally be provided, to e.g. provide aerobic micro-organism with supplement oxygen (such an inlet is not shown). The second reactor II, directly connected with the oxidation reactor I, in other respects is similarly built as said oxidation reactor. Like reactor I it comprises a vessel 15, a mixing means 16, 17, a gas outlet 18 connected with cleaning device 12, measuring means 19, a waste outlet 20 connecting reactor II via furthering means 21 and waste supply tube 22 with reactor III. Other supply means as well as heating/cooling means like for reactor I are not shown. Additionally, the first micro-organism containing reactor II can be connected by a tube 23, a furthering means 24 and a second tube 25 with the oxidation reactor I. Said tube 23, which starts in the second reactor II close to the bottom, i.e. within the waste and cell mixture, allows, via the pump 24 and the second tube 25 ending in an opening in the top plate 11, to recycle at least part of the waste.

Next to the first biological reactor II, a second and possibly further biological reactors, can be provided. In the Figure one additional biological reactor III is provided, followed by a reactor intended to perform a chemical or physical step.

Reactor III is equipped with the same means as reactor II, i.e. possibly a gas inlet, reagent supply means and cooling/heating means (all not shown), a reaction vessel 26, a mixing means 27, 28, a gas outlet 29 connected with cleaning device 12, measuring means 30, a waste outlet 31 connecting reactor III via furthering means 32 and waste supply tube 33 with reactor IV.

Reactor IV is designated for a chemical or physical treatment, here a chemical step. A chemical step can e.g. be a sterilisation step.

For performing a chemical step, the reactor IV is equipped similar to reactors I to III, i.e. with the same not shown means as well as with a reaction vessel 34, mixing means 35, 36, gas outlet 37 connected with cleaning device 12, measuring means 38 and a final outlet 39 for decontaminated material. In the case of sterilisation with e.g. ozone, an ozone inlet 40 connected with the ozone generator 9 is provided similar to oxidant inlet 4 of the oxidation reactor I. Of course not only the oxidation reactor I is sealed with a sealing plate 11, but also reactors II to IV are closed by sealing plates 41 to 43.

The regulation of the whole waste treatment plant can be effected by a central control unit (not shown) connected with the sensors, the pumps and the valves, which are provided in the tubes connecting the different reactors according to the skilled persons knowledge. Of course, in order to make the whole plant usable for a broad variety of wastes, additional reactors can be provided. Such additional reactors can be provided for parallel use to deal with great differences in residence times. Additional reactors can also be provided for optional use in series dependent of differing waste compositions such as different toxic substances occurring needing digestion by different kinds of modified micro-organisms. The treatment plant shown in the Figure can, as already mentioned, be a part of a larger waste treatment plant, and it can particularly be combined with storage vessels either prior or after the above described reactors.

Provided, the material has sufficient flowability, the process can be rather generally used.

While there are shown and described presently preferred embodiments of the invention, it is to be distinctly understood that the invention is not limited thereto but may be otherwise variously embodied and practiced within the scope of the following claims.

## Claims

1. A process for waste treatment characterised in that it comprises at least one oxidation step, followed by at least one biological step.

2. Process according to claim 1, characterised in that the at least one biological step consists of or comprises as first step a treatment with modified micro-organisms.

3. Process according to claim 1 or 2, characterised in that it comprises at least one oxidation step, followed by at least one biological step involving one or more kinds of modified micro-organisms, followed by at least one step involving non-modified micro-organisms.

4. Process according to anyone of claims 1 to 3 characterised in that the oxidant for at least one oxidation step comprises ozone.

5. Process according to anyone of claims 1 to 4 characterised in that it additionally comprises as last treatment step at least one chemical treatment.

6. Process according to anyone of claims 1 to 5 characterised in that it is a continuous process.

7. Process according to anyone of claims 1 to 6 characterised in that it provides recycling means.

8. Process according to anyone of claims 1 to 7 characterised in that the modified and/or non-modified micro-organism are immobilised.

9. Process according to anyone of claims 1 to 8 characterised in that each treatment step is performed in a separate reactor, preferably a bioreactor.

10. Process according to claim 9, characterized in that the reactor or reactors for the treatments with micro-organisms are horizontal-bioreactors.

11. Use of (bio)-reactors for waste treatment.

12. Use according to claim 11 characterized in that the (bio)-reactors comprise horizontal-bioreactors.

13. A plant for performing the process of anyone of claims 1 to 10 characterised in that it comprises as many reactors as treatment steps.
